# EUROPEAN PATENT SPECIFICATION

(11) **EP 2 052 514 B1**
(45) Date of publication and mention of the grant of the patent: **06.04.2011**
(21) Application number: 07766765.7
(22) Date of filing: 15.06.2007
(51) Int. Cl.: H04L 29/06, H04L 29/12

(54) **PERVASIVE INTER-DOMAIN DYNAMIC HOST CONFIGURATION**
PERVASIVE DYNAMISCHE HOST-KONFIGURATION ZWISCHEN DOMÄNEN
CONFIGURATION D'HÔTE DYNAMIQUE INTERDOMAINE GÉNÉRALISÉE

(30) Priority: 16.08.2006 EP 06119028; 08.11.2006 US 594140
(43) Date of publication of application: 29.04.2009
(73) Proprietor: Nokia Corporation, 02150 Espoo (FI)
(72) Inventor: TUONONEN, Janne, 003100 Nummela (FI); PÖYHÖNEN, Petteri, 00500 Helsinki (FI)
(74) Representative: TBK-Patent
(86) International application number: PCT/IB2007/052292
(87) International publication number: WO 2008/020350

(56) References cited:
- EP-A- 1 443 701
- US-A1- 2002 065 908
- US-A1- 2002 066 036
- US-A1- 2005 238 005

## Description

### Field of the invention

The present invention relates to pervasive inter-domain dynamic host configuration. In particular, the present invention relates to dynamic host configuration in a communication system comprising a plurality of domains being separated from each other by intermediary devices blocking host configuration messages, such as firewalls. Further, the present invention is for example directed to a pervasive Dynamic Host Configuration Protocol (DHCP) service in such a communication system.

### Background of the invention

In recent years, communication technology has widely spread in terms of number of users and amount of use of the telecommunication services by the users.

This has led to an increase in the number of different technologies and technological concepts in use, and a trend to converge different networks and/or network domains has emerged. In this regard, the Internet Protocol (IP) is widely used as a common basis for network interworking, thus developing so-called all-IP networks. This trend exists both in the fixed and the mobile networks as well as in combinations thereof. Thus, the Internet Protocol is widely spreading and its importance is becoming even higher.

Herein, the term IP does not only refer to the network level protocol as such, but is to be understood as the use of the respective protocol stack or part thereof.

The Internet Protocol for example requires the setting of many parameters within a protocol implementation. Because IP can be used on many dissimilar kinds of network hardware, values for those parameters cannot be guessed or assumed to have correct default values. Also, distributed address allocation schemes depend on a polling/defense mechanism for discovery of addresses that are already in use. IP hosts may not always be able to defend their network addresses, so that such a distributed address allocation scheme cannot be guaranteed to avoid allocation of duplicate network addresses, which is required for proper operation.

Hence, it is necessary that address allocation and parameter configuration setting is performed in an appropriate manner. To this end, a Dynamic Host Configuration Protocol (DHCP) has been proposed, which is defined in RFC 2131 (for IP version IPv4) and in RFC 3315 (for IP version IPv6).

The Dynamic Host Configuration Protocol (DHCP) provides a framework for passing configuration information to hosts on a network, having the capability of automatic allocation of reusable network addresses and additional configuration options. DHCP is built on a client-server model, where designated DHCP server hosts allocate network addresses and deliver configuration parameters to dynamically configured DHCP client hosts.

Although not restricted thereto, the following specification exemplarily refers to DHCP as an example framework for dynamic host configuration.

Standard DHCP is designed such that a local DHCP service is used separately in every local domain. That is, DHCP is used to distribute local network addressing and configuration information in a limited scope such as within a specific Internet Service Provider (ISP) network or network domain. Firewalls and other middle-box devices on the edge of such administrative domains are typically configured to block any DHCP traffic destined to the outside thereof. Consequently, utilizing DHCP signaling between independent DHCP domains is unfeasible. Stated in other words, according to present DHCP protocols both for IPv4 and IPv6, a client node in a local domain is not able to communicate with a non-local DHCP framework (e.g. a DHCP server in another domain).

Such a constraint is particularly detrimental in a dynamic network environment such as for example a Personal Area Network (PAN) or a Mobile Ad-hoc Network (MANET). If the network topology is a bit complex, or whenever it changes, the configuration and use of a standard DHCP service can be unfeasible due to an involved manual configuration. For example, whenever a mobile node of a dynamic or mobile communication system is starting to act as a mobile router, thus providing e.g. Internet access to other nodes connected thereto, all access-specific parameters need to be distributed to the nodes using the provided access. However, this is not possible according to currently available solutions of DHCP frameworks.

Another example is a mobile node roaming in a visited network or network domain, when its home network comprising its home DHCP server is separated from its current location in the visited network by at least one intermediary device such as a firewall or a network address translator (NAT) or the like. In this case, the roaming node is not enabled to have an address allocated or configuration parameters provided by its DHCP server, because of the intermediary devices blocking DHCP traffic.
In the document US 2005/0238005 A1, there is disclosed a method and apparatus for controlling traffic in a computer network, wherein a corresponding technique includes modifying a packet generated by a first computer. The packet may be intended for a second computer, but is modified to be redirected to a third computer. The packet may be processed in the third computer prior to being forwarded from the third computer to the second computer. The packet may be scanned for viruses at the third computer, for example. Among other advantages, the technique allows for scanning of early generated packets, redirection of selected packets, and routing of packets from a computer in general.

In view of mobile and dynamic network environments, a solution to the above problems and drawbacks is needed for providing a pervasive inter-domain dynamic host configuration.

### Summary of the invention

Consequently, it is an object of the present invention to remove the above drawbacks and to provide accordingly improved methods, apparatuses, network elements and systems.
According to the present invention, this object is achieved by a method, an apparatus and a computer program, as defined in the appended claims.
Generally, the following aspects are disclosed herein, all of which are capable of contributing to achieving the above object.

According to a first aspect of the present disclosure, there is disclosed a method, comprising obtaining a host configuration message to be transferred from a source entity to a destination entity, the destination entity of the host configuration message being located in a different domain than the source entity of the host configuration message, the domains being separated from each other by intermediary devices blocking host configuration messages; encapsulating the obtained host configuration message based on an encapsulation procedure; and transferring the encapsulated host configuration message toward the destination entity.

According to further advantageous developments of the first aspect, one or more of the following applies:

- the obtaining, encapsulating and transferring is performed at the source entity;

- the method further comprises receiving the encapsulated host configuration message at a relay entity; decapsulating the received encapsulated host configuration message based on an inverse encapsulation procedure; and transferring the host configuration message toward the destination entity;

- the method further comprises receiving the encapsulated host configuration message at a relay entity; forwarding the received encapsulated host configuration message toward the destination entity;

- the obtaining, encapsulating and transferring is performed at a relay entity, wherein the host configuration message is obtained by receiving it from the source entity;

- the method further comprises receiving the encapsulated host configuration message at the destination entity; and decapsulating the received encapsulated host configuration message at the destination entity based on the inverse encapsulation procedure;

- the encapsulation procedure is based on a protocol, whose transmission is supported by the intermediary devices;

- the encapsulation procedure is based on a Hypertext Transfer Protocol, HTTP;

- the host configuration message is in accordance with a Dynamic Host Configuration Protocol, DHCP;

- the source entity comprises a DHCP client and the destination entity comprises a DHCP server; and/or

- the source entity comprises a DHCP server and the destination entity comprises a DHCP client.

According to a second aspect of the present disclosure , there is disclosed an apparatus, comprising a processor configured to operate the apparatus as a dynamic host configuration client or server; an obtainer configured to obtain a host configuration message to be transferred from a source entity to a destination entity, the destination entity being located in a different domain than the source entity of the host configuration message, the domains being separated from each other by intermediary devices configured to block host configuration messages; an encapsulator configured to encapsulate the obtained host configuration message based on an encapsulation procedure; and a sender configured to transfer the encapsulated host configuration message toward the destination entity.

According to further advantageous developments of the second aspect, the apparatus further comprises a receiver configured to receive an encapsulated host configuration message, wherein the message is encapsulated based on an encapsulation procedure; and a decapsulator configured to decapsulate the received encapsulated host configuration message based on an inverse encapsulation procedure.

According to a third aspect of the present disclosure, there is disclosed an apparatus, comprising a processor configured to operate the apparatus as a dynamic host configuration relay agent; a receiver configured to receive a host configuration message; an encapsulator configured to encapsulate the received host configuration message based on an encapsulation procedure; and a sender configured to transfer the encapsulated host configuration message from a source entity toward a destination entity, the destination entity being located in a different domain than the source entity of the host configuration message, the domains being separated from each other by intermediary devices configured to block host configuration messages.

According to a fourth aspect of the present disclosure , there is disclosed an apparatus, comprising: a processor configured to operate the apparatus as a dynamic host configuration relay agent; a receiver configured to receive an encapsulated host configuration message, the message being encapsulated based on an encapsulation procedure; a decapsulator configured to decapsulate the received encapsulated host configuration message based on an inverse encapsulation procedure; and a sender configured to transfer the host configuration message from a source entity toward a destination entity, the destination entity being located in a different domain than the source entity of the host configuration message, the domains being separated from each other by intermediary devices configured to block host configuration messages.

According to further advantageous developments of the fourth aspect, the apparatus further comprises an encapsulator configured to encapsulate the received and decapsulated host configuration message based on an encapsulation procedure.

According to a fifth aspect of the present disclosure , there is disclosed a method, comprising initiating, by client means, a dynamic host configuration of a host apparatus with a remote server apparatus in a communication system by generating a host configuration message destined for the server apparatus; and relaying, by relay agent means, the generated host configuration message from the client means toward the remote server apparatus such that the relayed host configuration message is not blocked by intermediary devices,wherein the communication system comprises a plurality of domains being separated from each other by the intermediary devices blocking host configuration messages.

According to further advantageous developments of the fifth aspect, one or more of the following applies:

- the relaying further comprises communicating between the relay agent means and remote relay agent apparatuses and server apparatuses by means of their global unicast addresses;

- the method further comprises encapsulating, by encapsulating means, the host configuration message based on an encapsulation procedure, wherein said relaying of the host configuration message is performed via the encapsulating means;

- the encapsulation procedure is based on a protocol, whose transmission is supported by the intermediary devices;

- the encapsulation procedure is based on a Hypertext Transfer Protocol, HTTP;

- the method further comprises first-stage deciding whether or not relaying is to be used for dynamic host configuration;

- the method further comprises second-stage deciding whether or not encapsulating is to be used for dynamic host configuration;

- the method further comprises receiving an encapsulated host configuration message from a remote relay agent apparatus or server apparatus and decapsulating the received encapsulated host configuration message;

- the method further comprises receiving a host configuration message and determining whether or not the received message is destined for the client means;

- the method further comprises committing, by a server means, a dynamic host configuration of network nodes connected to the host apparatus, said network nodes acting as client nodes, by processing incoming host configuration messages from the network nodes; and storing, in a configuration database, host configurations received from the client means, wherein said processing is performed by means of the configurations stored;

- the method further comprises triggering configuration requests from the server means in the client means;

- the method further comprises multi-access mapping to adapt the host apparatus to an actual interface used for dynamic host configuration, wherein said host apparatus comprises a plurality of interfaces for dynamic host configuration.

- the multi-access mapping further comprises monitoring changes in physical and/or virtual interfaces of the host apparatus;

- the client means is further configured to operate in such a way that a dynamic host configuration is associated with any interface; and/or

- the host configuration message is in accordance with a Dynamic Host Configuration Protocol, DHCP.

According to a sixth aspect of the present disclosure , there is disclosed an apparatus, comprising an initiator configured to initiate a dynamic host configuration of a host apparatus with a remote server apparatus in a communication system by generating a host configuration message destined for the server apparatus; and a relay configured to relay the generated host configuration message from the means initiator toward the remote server apparatus such that the relayed host configuration message is not blocked by intermediary devices, wherein the communication system comprises a plurality of domains being separated from each other by the intermediary devices configured to block host configuration messages.

According to further advantageous developments of the sixth aspect, one or more of the following applies:

- the apparatus further comprises a transceiver configured to communicate with remote relay agent apparatuses and server apparatuses by means of their global unicast addresses;

- the apparatus further comprises an encapsulator configured to encapsulate the host configuration message based on an encapsulation procedure, and a relay configured to relay the host configuration message via the encapsulator;

- the encapsulation procedure is based on a protocol, whose transmission is supported by the intermediary devices;

-the encapsulation procedure is based on a Hypertext Transfer Protocol, HTTP;

- the apparatus further comprises a first decider configured to decide on a first stage whether or not the relay is to be used for dynamic host configuration;

- the apparatus further comprises a second decider configured to decide on a second stage whether or not the encapsulator is to be used for dynamic host configuration;

- the apparatus further comprises a receiver configured to receive an encapsulated host configuration message from a remote relay agent apparatus or server apparatus; and a decapsulator configured to decapsulate the received encapsulated host configuration message;

- relay comprises a receiver configured to receive a host configuration message; and a determinator configured to determine whether or not the received message is destined for the initiator;

- the apparatus further comprises a committer configured to commit a dynamic host configuration of network nodes connected to the host apparatus, said network nodes acting as client nodes, by processing incoming host configuration messages from the network nodes; and a storage configured to receive host configurations from the initiator and to store the configurations, said committer further comprising a processor configured to process the incoming messages by way of the configurations stored in the storage;

- the committer further comprises a trigger configured to trigger configuration requests in the initiator;

- the apparatus has a plurality of interfaces for dynamic host configuration, and further comprises a multi-access mapper configured to adapt the host apparatus to an actual interface used for dynamic host configuration;

- the multi-access mapper further comprises a monitor configured to monitor changes in physical and/or virtual interfaces of the host apparatus;

- the initiator further comprises a processor configured to operate in such a way that a dynamic host configuration is associated with any interface; and/or

- the apparatus comprises a processor configured to operate in accordance with a Dynamic Host Configuration Protocol, DHCP.

According to a seventh aspect of the present disclosure , there is disclosed a computer program embodied in a computer-readable medium, comprising program code configured to operate a host apparatus for dynamic host configuration in a communication system comprising a plurality of domains being separated from each other by intermediary devices blocking host configuration messages, the computer program being configured to perform a method according to the fifth aspect of the present disclosure.

According to an eighth aspect of the present disclosure, there is disclosed a computer program embodied in a computer-readable medium, comprising program code configured to operate an apparatus for dynamic host configuration in a communication system comprising a plurality of domains being separated from each other by intermediary devices blocking host configuration messages, wherein a source entity and a destination entity of a host configuration message are located in different domains, the computer program being configured to perform a method according to any the first aspect of the present disclosure.

According to a ninth aspect of the present disclosure, there is disclosed an apparatus, comprising means for acting as a dynamic host configuration client or server; means for obtaining a host configuration message to be transferred from a source entity to a destination entity, the destination entity being located in a different domain than the source entity of the host configuration message, the domains being separated from each other by intermediary devices configured to block host configuration messages; means for encapsulating the obtained host configuration message based on an encapsulation procedure; and means for transferring the encapsulated host configuration message toward the destination entity.

According to a tenth aspect of the present disclosure, there is disclosed an apparatus, comprising means for acting as a dynamic host configuration relay agent; means for receiving a host configuration message; means for encapsulating the received host configuration message based on an encapsulation procedure; and means for transferring the encapsulated host configuration message from a source entity toward a destination entity, the destination entity being located in a different domain than the source entity of the host configuration message, the domains being separated from each other by intermediary devices configured to block host configuration messages.

According to an eleventh aspect of the present disclosure, there is disclosed an apparatus, comprising means for acting as a dynamic host configuration relay agent; means for receiving an encapsulated host configuration message, the message being encapsulated based on an encapsulation procedure;
means for decapsulating the received encapsulated host configuration message based on an inverse encapsulation procedure; and means for transferring the host configuration message from a source entity toward a destination entity, the destination entity being located in a different domain than the source entity of the host configuration message, the domains being separated from each other by intermediary devices configured to block host configuration messages.

According to a twelfth aspect of the present disclosure, there is disclosed an apparatus, comprising means for initiating a dynamic host configuration of a host apparatus with a remote server apparatus in a communication system by generating a host configuration message destined for the server apparatus; and means for relaying the generated host configuration message from the means for initiating a dynamic host configuration toward the remote server apparatus such that the relayed host configuration message is not blocked by intermediary devices, wherein the communication system comprises a plurality of domains being separated from each other by the intermediary devices configured to block host configuration messages.

The above methods, apparatuses and computer programs according to aspects of the present disclosure are particularly applicable for dynamic host configuration in a communication system comprising a plurality of domains being separated from each other by intermediary devices blocking host configuration messages, such as firewalls.

Embodiments of the present invention enable to use local and non-local dynamic host configuration services independently on a current local network attachment point of a mobile node, thus providing a pervasive dynamic host configuration service as well as a simultaneous use of multiple dynamic host configuration frameworks.

Embodiments of the present invention whose transmission is supported by the intermediary devices further provide an enhanced dynamic host configuration apparatus (comprising client and/or server) supporting non-local dynamic host configuration use and/or multi-access and/or a controlled dynamic host configuration server service, when a mobile node is acting as a mobile router, thus providing e.g. Internet access for proximity networks.

Embodiments of the present invention further provide for a pervasive dynamic host configuration in a case where a node is acting as a client in one domain or framework and as a server in another domain or framework.

In short, embodiments of the present invention provide for the following advantages:
- simultaneous use of multiple dynamic host configuration frameworks,
- transparent dynamic host configuration messaging traversal through middle-box devices,
- non-local use of dynamic host configuration framework (i.e. a roaming model),
- reliable dynamic host configuration when using appropriate encapsulation procedure providing reliability in message delivering,
- generic multi-access support for dynamic host configuration (client and server),
- automated and synchronized method to transfer configuration information between different dynamic host configuration frameworks when a node is acting as a client in one framework and as a server in another framework, and/or
- easy deployment of a dynamic host configuration service to a proximity network environment.

### Brief description of the drawings

In the following, the present invention will be described in greater detail with reference to the accompanying drawings, in which

Fig. 1 illustrates a schematic overview of a scenario according to an embodiment of the present invention;

Fig. 2 illustrates message structures of DHCP messages according to an embodiment of the present invention;

Fig. 3 illustrates a schematic flow chart of a client method for sending messages according to an embodiment of the present invention;

Fig. 4 illustrates a schematic flow chart of a client method for receiving messages according to an embodiment of the present invention;

Fig. 5 illustrates a schematic flow chart of a relay agent method for forwarding non-encapsulated messages according to an embodiment of the present invention;

Fig. 6 illustrates a schematic flow chart of a relay agent method for forwarding encapsulated messages according to an embodiment of the present invention;

Fig. 7 illustrates a schematic flow chart of a server method for receiving encapsulated messages according to an embodiment of the present invention;

Fig. 8 illustrates a schematic flow chart of a server method for sending messages according to an embodiment of the present invention;

Fig. 9 illustrates a schematic block diagram of an enhanced DHCP host according to an embodiment of the present invention;

Fig. 10 illustrates a schematic block diagram of an enhanced DHCP host according to an embodiment of the present invention;

Fig. 11 illustrates a logical two-stage decision process according to an embodiment of the present invention;

Fig. 12 illustrates a schematic flow chart of a local relay agent means method for relaying messages received from a local client means according to an embodiment of the present invention;

Fig. 13 illustrates a schematic flow chart of a local relay agent means method for forwarding messages toward a local client means according to an embodiment of the present invention;

Fig. 14 illustrates a schematic block diagram of an enhanced DHCP host according to an embodiment of the present invention; and

Fig. 15 illustrates a schematic block diagram of an enhanced DHCP host according to an embodiment of the present invention.

### Detailed description of embodiments of the present invention

The present invention is described herein with reference to particular non-limiting examples. A person skilled in the art will appreciate that the invention is not limited to these examples, and may be more broadly applied.

In particular, the present invention is described in relation to DHCP as a known dynamic host configuration scheme. As such, the description of the embodiments given herein specifically refers to terminology which is directly related to DHCP. Such terminology is however only used in the context of the presented examples, and does not limit the invention in any way. That is, all aspects of the present invention are similarly applicable for a dynamic host configuration being based on another scheme, as long as that has a comparable underlying concept.

[First overall embodiment]

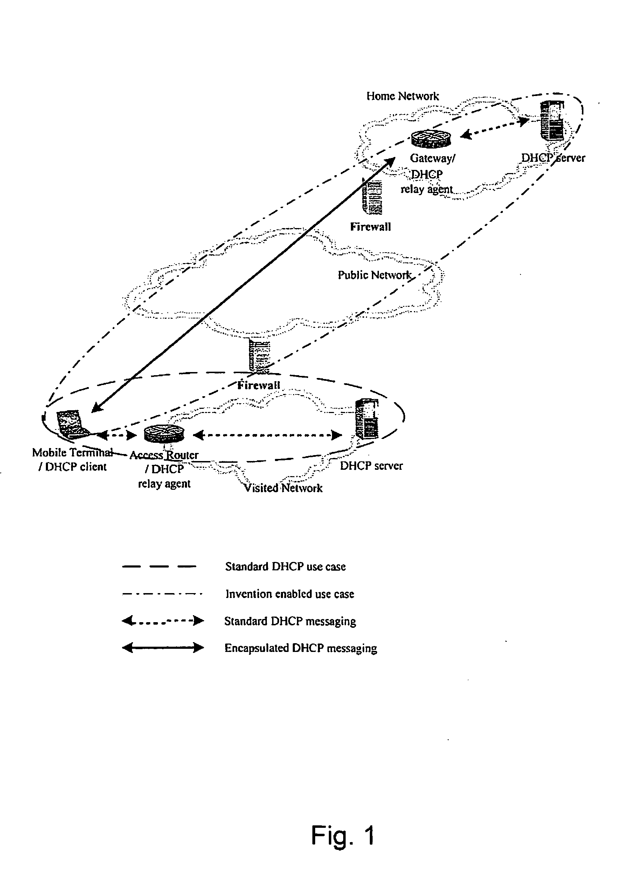

Fig. 1 illustrates a schematic overview of a scenario according to an embodiment of the present invention.

In Fig. 1, there is depicted a communication system comprising a plurality of networks or domains, i.e. a visited network, a public network and a home network. These networks or domains are separated from each other by firewalls, which are depicted as an example for intermediary devices blocking host configuration messages, i.e. DHCP traffic, for example. The terms "visited" and "home" denoting particular domains relate to a mobile terminal acting as DHCP client in the illustrated example.

The mobile terminal of Fig. 1, for some reason as e.g. being switched on in the depicted situation, requires to perform a dynamic host configuration according to DHCP. The visited network represents the local DHCP framework comprising a DHCP relay agent and a DHCP server. However, a DHCP messaging within this local framework (illustrated by dashed line arrows) is not suited to provide the mobile terminal with appropriate address and/or configuration information. For this purpose, the mobile terminal has to communicate with its home DHCP server being located in its remote home network.

According to an embodiment of the present invention, in general terms being referred to as encapsulation-based DHCP, the mobile DHCP client node is enabled to perform an encapsulated DHCP messaging with its home DHCP server through different domains and intermediary devices blocking DHCP traffic (illustrated by solid line arrows).

For inter-domain dynamic host configuration according to the present embodiment, the mobile terminal encapsulates a DHCP message generated and transfers the encapsulated DHCP message through the communication system. The encapsulated messaging is applicable between a client and a relay agent or server, and between a relay agent and another relay agent or server.

An encapsulation procedure used in this embodiment is based on a protocol, whose transmission is supported by the intermediary devices, e.g. firewalls, as well as access and transport networks. Thereby, the encapsulation provides for a transparent DHCP traversal through firewalls, networks address translators (NAT), network access port translators (NAPT) and other kinds of middle-box devices. Stated in other words, the encapsulation-based DHCP enables a (reliable) exchange of host configuration messages between DHCP entities (i.e. client, relay agent, server) in independent (separated) DHCP frameworks.

The encapsulated message is decapsulated at a destination entity or at a relay entity, which uses the same (but inverted) encapsulation procedure.

In principle, an encapsulation of host configuration messages can be performed at a client entity or at a relay agent entity, and a respective decapsulation of encapsulated host messages can be performed at a relay agent entity or at a server entity. Thus, in an example scenario with a client, two relay agents and a server, the following basic use cases of encapsulation-based DHCP messaging according to Table 1 are possible in the present embodiment.

**Table 1**

| client -> | relay agent -> | relay agent -> |
|---|---|---|
| relay agent | relay agent | server |
| encapsulated | non-encapsulated | non-encapsulated |
| non-encapsulated | encapsulated | non-encapsulated |
| non-encapsulated | non-encapsulated | encapsulated |
| encapsulated | encapsulated | non-encapsulated |
| non-encapsulated | encapsulated | encapsulated |
| encapsulated | non-encapsulated | encapsulated |
| encapsulated | encapsulated | encapsulated |

That is, any combination of encapsulated and non-encapsulated (i.e. standard) messaging on each individual link is possible. Accordingly, the respective apparatuses and entities involved are configured correspondingly according to an embodiment of the present invention.

Pursuant to alternative implementations, the use of encapsulation can be pre-configured or can be agreed upon dynamically (by negotiation) between respective apparatuses or entities.

According to a present implementation, the encapsulation is performed by an encapsulation procedure being based a protocol of layer 4 or above according to the OSI (Open Systems Interconnection) reference model. One example of such a layer 4+ protocol is HTTP (Hypertext Transfer Protocol). The encapsulation procedure used does preferable not utilize any IP address or port number in layers 4 to 7, if transparency to application level gateways (ALG) of NAT or NAPT is desired. In detail, the encapsulation procedure involves a standalone set of protocols of different layers, e.g. IP + TCP (Transport Control Protocol) + HTTP. Moreover, if the encapsulation procedure used is secured, e.g. by using HTTPS, the encapsulated DHCP message is secured as well.

From firewall or middle-box perspective, if HTTP is used as encapsulation protocol, a method according to a firewall enhancement protocol (FEP) as defined in RFC 3093 may be used to get traversal through firewalls. The firewall enhancement protocol defines for example how to encode IP and TCP headers and to what HTTP messages they are to be used.

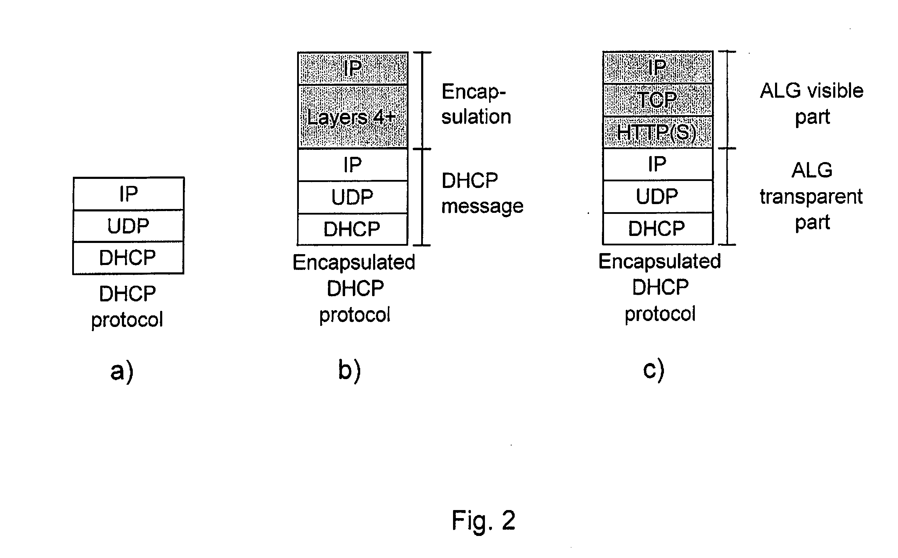

Fig. 2 illustrates by way of example message structures of DHCP messages according to an embodiment of the present invention.

In Fig. 2a), there is depicted a standard DHCP message using protocols IP (Internet Protocol), UDP (User Datagram Protocol) and DHCP (Dynamic Host Configuration Protocol). An example of an encapsulated message of the present embodiment is depicted in Fig. 2b). The encapsulated message can be divided into the original DHCP message of Fig. 2a) and an encapsulation part comprising an IP section and a section denoted by layers 4+, representing the encapsulation procedure used. Fig. 2c) depicts another example of an encapsulated message of the present embodiment. Namely, the message of Fig. 2c) is encapsulated by means of HTTPS as an example of a secured encapsulation procedure. The part of the encapsulation is visible to an access level gateway (ALG), whereas the part of the original DHCP message is transparent to an ALG, and thus the encapsulated message will not be blocked.

In the context of the present embodiment, it is to be noted that, due to the nature of the used addressing in DHCP, it is possible that source addresses of the inner and outer IP header are not equal (i.e. DHCP message creation point may be different from its encapsulation point) and therefore a relay agent and a server need to be able to do necessary mapping between the different source addresses for a possible response. Correspondingly, the destination addresses may be different, representing the case in which a DHCP message destination point is different from its decapsulation point.

The thus proposed method is compliant to current standards, does not add any new message delivery points, and thus maintains the overall signaling path. If provided optionally, additional message delivery points are used for encapsulation/decapsulation, which are not visible to the DHCP framework.

Stated in general terms, there is provided a method of dynamic host configuration in a communication system comprising a plurality of domains being separated from each other by intermediary devices blocking host configuration messages, wherein a source entity and a destination entity of a host configuration message are located in different domains, the method comprising the steps of obtaining (i.e. receiving or generating) a host configuration message to be transferred to the destination entity, encapsulating the obtained host configuration message based on an encapsulation procedure, and transferring the encapsulated host configuration message toward the destination entity.

Embodiments of the present invention are directed to respective apparatuses which are configured to perform the above methods. Such apparatuses are provided for a client entity, a relay agent entity, and a server entity.

In the following, the apparatuses of the present embodiments (although not shown) are described by way of the functions carried out at them, respectively. However, it is to be understood that the present invention also comprises respectively configured and arranged functional elements, apparatuses, devices and means. In the following, only those functions and/or means are described, which are relevant for the description of the present embodiments, thus omitting generally known functions and/or means of the respective apparatuses or entities.

As the following schematic flow charts are self-explaining for a skilled person, a detailed description thereof will not be given herein.

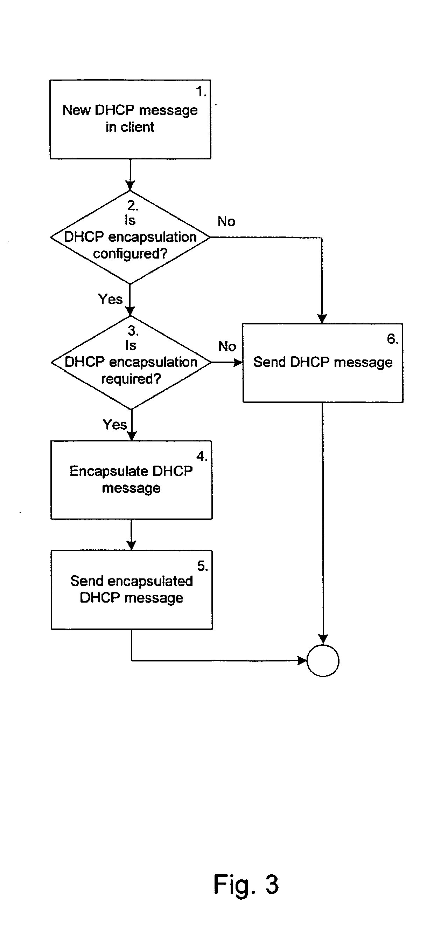

Fig. 3 illustrates a schematic flow chart of a client method for sending messages according to an embodiment of the present invention. A client or client apparatus for dynamic host configuration, which is configured to perform this method, comprises an obtainer or obtaining means for generating the DHCP message, an encapsulator or encapsulating means for encapsulating the generated DHCP message, if required, e.g. based on a layer 4+ protocol, and a sender or transferring means such as a sender for transferring the encapsulated or non-encapsulated DHCP message toward a destination entity, namely to a destination server or an intermediate relay entity. The client or client apparatus further comprises a respective decider and determinator, i.e. respective decision or determination means for making the decisions of steps 2 and 3 of Fig. 3.

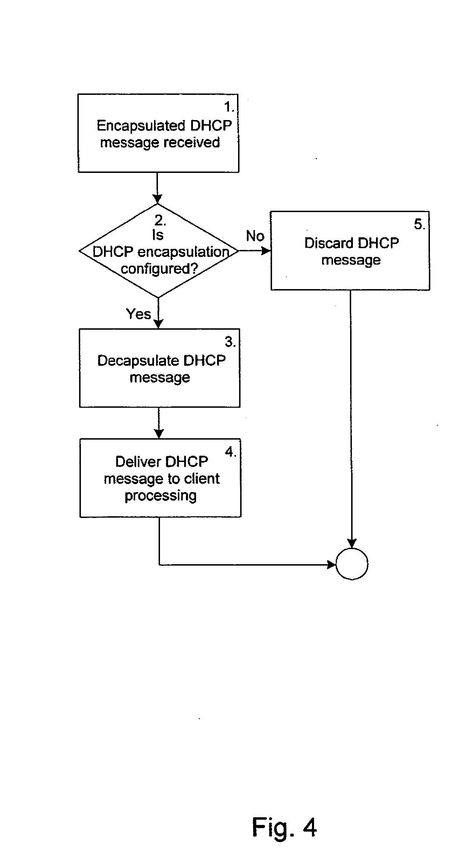

Fig. 4 illustrates a schematic flow chart of a client method for receiving messages according to an embodiment of the present invention. A client or client apparatus for dynamic host configuration, which is configured to perform this method, comprises a receiver or receiving means for receiving an encapsulated DHCP message, wherein the message is encapsulated based on a certain encapsulation procedure, and a decapsulator or decapsulating means for decapsulating the received encapsulated DHCP message based on the inverse encapsulation procedure. The client or client apparatus further comprises a respective decider and determinator, i.e. respective decision or determination means for making the decision of step 2 of Fig. 4.

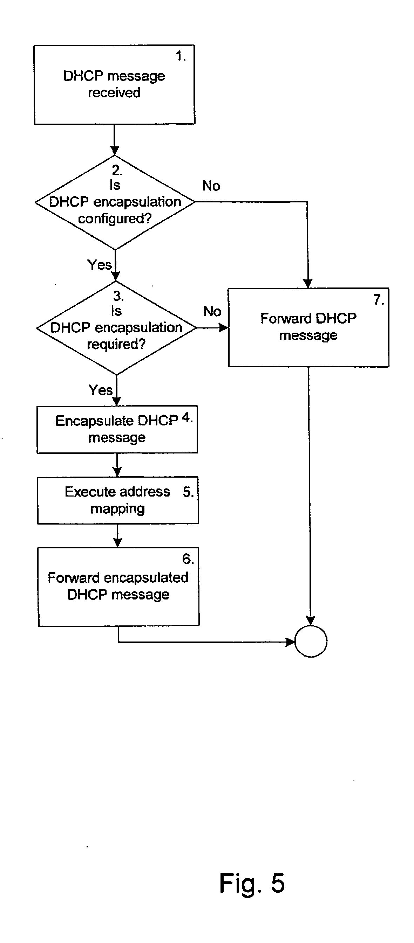

Fig. 5 illustrates a schematic flow chart of a relay agent method for forwarding non-encapsulated messages according to an embodiment of the present invention. A relay agent or relay agent apparatus for dynamic host configuration, which is configured to perform this method, comprises a receiver or receiving means for receiving a standard (i.e. non-encapsulated) DHCP message, an encapsulator or encapsulating means for encapsulating the received DHCP message, if required, and a sender or transferring means such as a sender for transferring the encapsulated or non-encapsulated DHCP message toward a destination entity, namely to a destination server or another intermediate relay entity. To this end, an address mapper or address mapping means are provided. The relay agent or relay agent apparatus further comprises a respective decider and determinator, i.e. respective decision or determination means for making the decisions of steps 2 and 3 of Fig. 5.

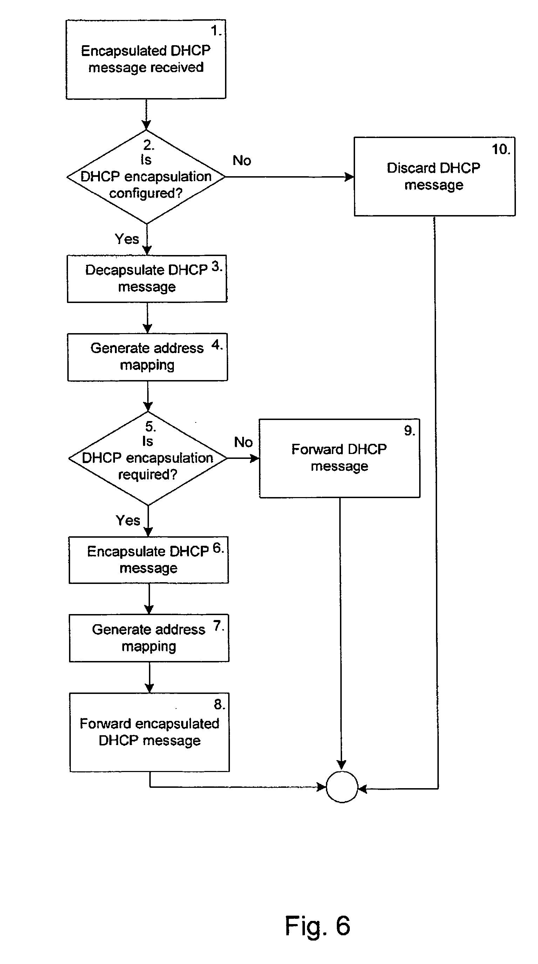

Fig. 6 illustrates a schematic flow chart of a relay agent method for forwarding encapsulated messages according to an embodiment of the present invention. In contrast to the embodiment of Fig. 5, a relay agent or relay agent apparatus of Fig. 6 is configured to receive encapsulated DHCP messages. The relay agent or relay agent apparatus for dynamic host configuration, which is configured to perform this method, comprises a receiver or receiving means for receiving an encapsulated DHCP message, e.g. from a client or another relay agent, a decapsulator or decapsulating means for decapsulating the received encapsulated DHCP message, if required, an encapsulator or encapsulating means for encapsulating the previously decapsulated DHCP message again (after being processed), and a sender or transferring means such as a sender for transferring the encapsulated or non-encapsulated DHCP message toward a destination entity, namely to a destination server or another intermediate relay entity. An address mapper or address mapping means are also provided for executing address mapping, when the message is decapsulated and/or when the message is encapsulated again. The relay agent or relay agent apparatus further comprises a respective decider and determinator, i.e. respective decision or determination means for making the decisions of steps 2 and 5 of Fig. 6.

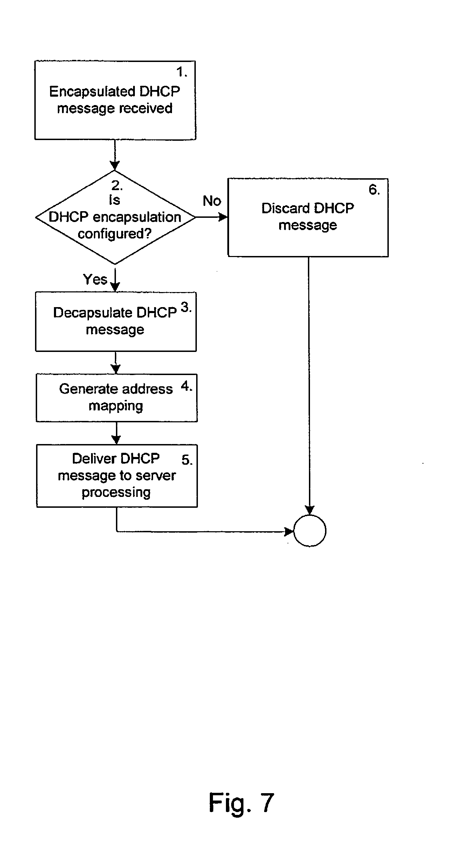

Fig. 7 illustrates a schematic flow chart of a server method for receiving encapsulated messages according to an embodiment of the present invention. This method of the server side basically corresponds to the respective method of the client side, as depicted in Fig. 4, further comprising an address mapping generation step. Thus, the respective server or server apparatus also structurally basically corresponds to the client or client apparatus according to Fig. 4, additionally comprising an address mapper or address mapping means, if required.

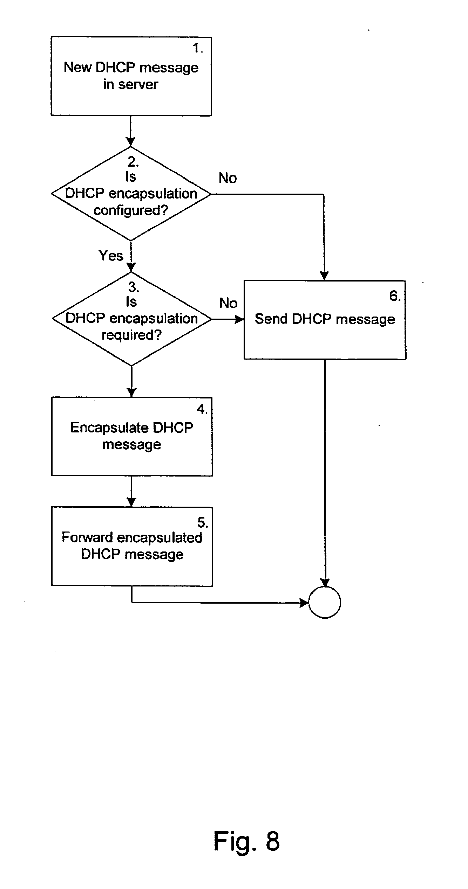

Fig. 8 illustrates a schematic flow chart of a server method for sending messages according to an embodiment of the present invention. This method of the server side basically corresponds to the respective method of the client side, as depicted in Fig. 3, further comprising an address mapping generation step. Thus, the respective server or server apparatus also structurally basically corresponds to the client or client apparatus according to Fig. 3, additionally comprising an address mapper or address mapping means, if required.

[Second overall embodiment]

Embodiments of the present invention are also directed to an enhanced host (or client) for dynamic host configuration, e.g. an enhanced DHCP host (or client). An enhanced host according to present embodiments is suited to be applied in a scenario as exemplarily illustrated in Fig. 1, that is in a communication system comprising a plurality of domains being separated from each other by intermediary devices blocking host configuration messages.

According to certain embodiments, the DHCP host enables a pervasive (inter-domain) use of dynamic host configuration, e.g. according to DHCP, in hosts regardless of its current location in the communication system. In this embodiment, the enhanced DHCP host basically acts as a mobile node, not as a mobile router. That is, pervasive DHCP usage refers to additional functions on a mobile node side of a host (or client), which particularly relate to use cases and circumstances where standard DHCP is not successfully applicable. These are for example:
- exchange of DHCP messages between DHCP entities in independent DHCP frameworks or domains (i.e. non-local DHCP usage), such as a DHCP client node being located in a visited network and requesting configurations from its home network, or
- DHCP client-server message exchange in a proximity network that does not have its own DHCP framework, such as a mobile network for example.

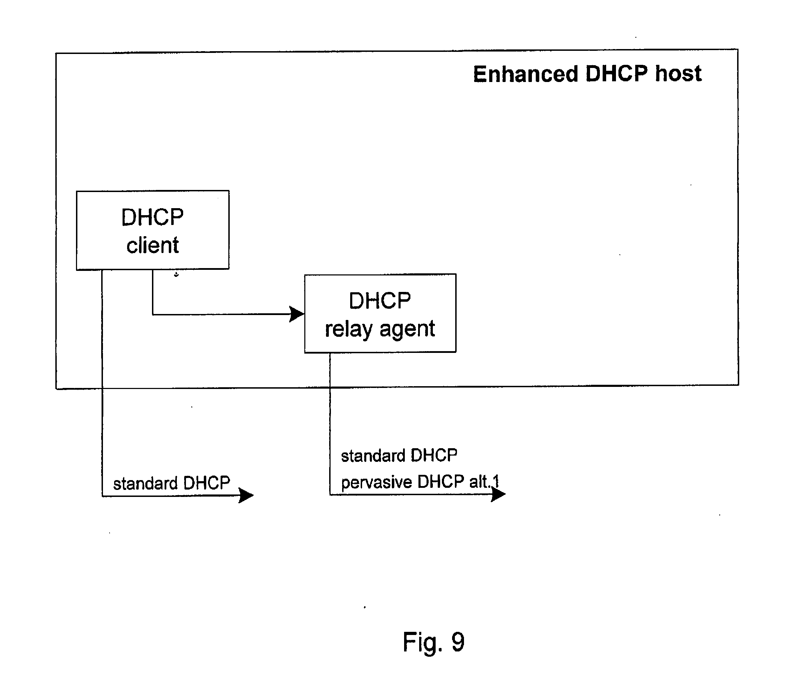

Fig. 9 illustrates a schematic block diagram of an enhanced DHCP host according to an embodiment of the present invention.

According to Fig. 9, the host apparatus of the present embodiment comprises a DHCP client means containing standard client functionality according to standard DHCP and additional functionalities according to the present invention. The DHCP client means, also referred to as initiator or initiating means, is operable to initiate a dynamic host configuration of the enhanced DHCP host apparatus either by way of standard DHCP or by way of pervasive DHCP of a first alternative. The DHCP host apparatus further comprises a DHCP relay agent means (also referred to as relay or relaying means), connected to the DHCP client means, which is operable for relaying DHCP messages received from the DHCP client means toward the remote server apparatus, e.g. via a remote relay agent or not. The relay agent means is configured to relay the DHCP messages such that the relayed DHCP messages are not blocked by intermediary devices such as firewalls.

According to the first alternative, this is achieved by utilizing the capability of DHCP relay agents to be allowed, unlike DHCP clients, to communicate with other trusted DHCP relay agents and servers with their global unicast addresses. That is, when pervasive DHCP use is needed, instead of a normal sending operation, the local DHCP client means delivers messages to the local relay agent means for relaying (referred to as alternative 1).

Because this relay agent functionality is strictly for the pervasive DHCP usage, it is transparent to a local DHCP framework, i.e. it is not used with a local DHCP framework.

This method as such is however vulnerable to possible middle-box filtering, such as firewalls, on the packet path and therefore is particularly feasible in cases where security and reliability of the packet path has been established in advance, such as over IP-IP tunnels or in local trusted networks.

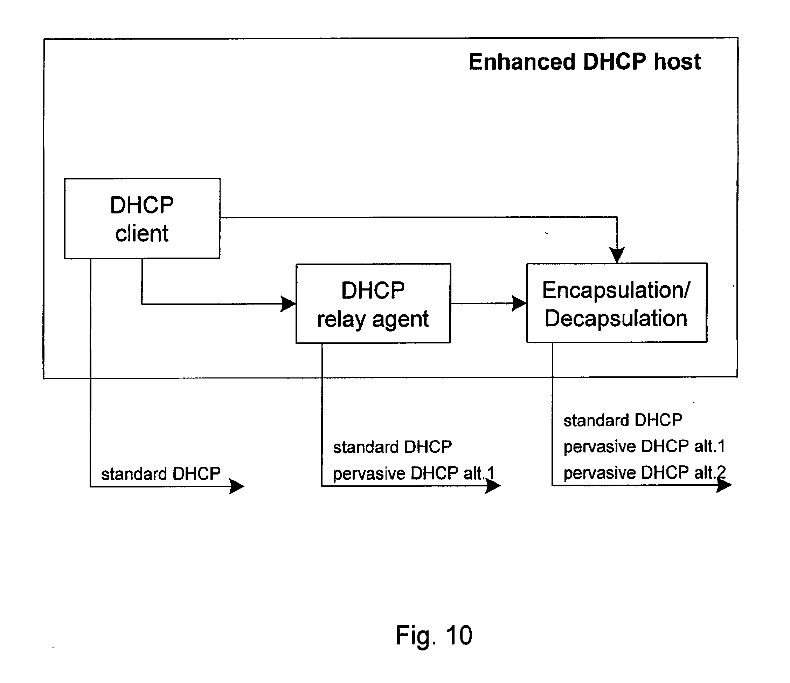

Fig. 10 illustrates a schematic block diagram of an enhanced DHCP host according to another embodiment of the present invention. In this embodiment, the DHCP host again enables a pervasive (inter-domain) use of dynamic host configuration, e.g. according to DHCP, in hosts regardless of its current location in the communication system. Again, the enhanced DHCP host basically acts as a mobile node, not as a mobile router.

According to Fig. 10, the host apparatus of the present embodiment comprises a DHCP client means and a DHCP relay means, which basically correspond to that of Fig. 9, thus not being described in detail here. The enhanced DHCP host apparatus of the present embodiment further comprises an encapsulator or encapsulating means for encapsulating DHCP messages received from the DHCP client means or the DHCP relay agent means according to a pervasive DHCP usage of a second alternative.

Hence, the second alternative of pervasive DHCP usage is effected by using encapsulation, for example an encapsulation-based DHCP method as described above in connection with the first overall embodiment. That is, when pervasive DHCP usage is needed, instead for normal relaying, the relay agent means delivers DHCP messages to the encapsulator or encapsulation means (referred to as alternative 2).

This alternative requires no existing secured connectivity or existing reliable transport on the packet path, but it can provide those itself. Therefore, it can be applied in any network.

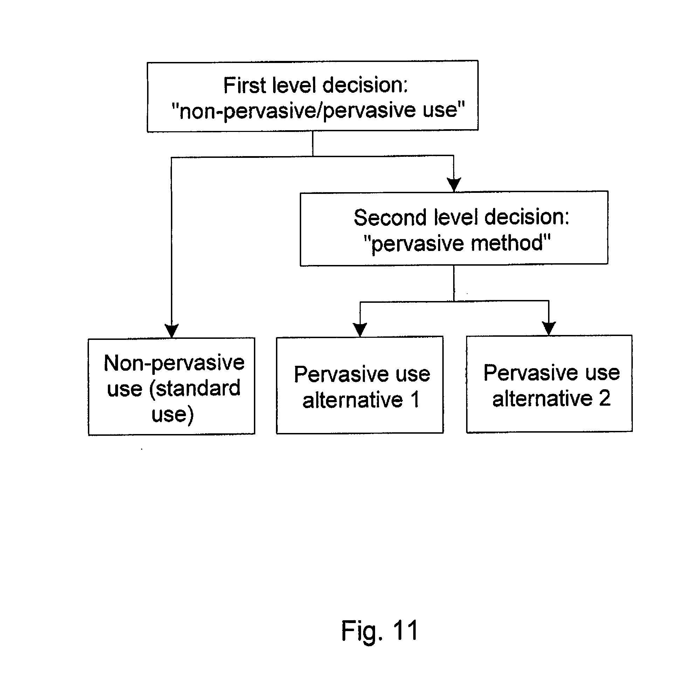

It is evident from Figs. 9 and 10 that the present embodiments provide for several alternatives for using a pervasive (inter-domain) host configuration. The logical two-stage decision process of the present embodiment is illustrated in Fig. 11, without being described because of being self-explaining in view of the foregoing.

In order to perform the decision process as illustrated in Fig. 11, the enhanced DHCP host apparatus of Fig. 10 comprises a first decider or a first decision means, i.e. a first decision logic, for making the first decision whether or not pervasive DHCP is to be used, namely whether or not the relay agent means is to be used for dynamic host configuration. Further, it comprises a second decider or a second decision means, i.e. a second decision logic, for making the second decision whether alternative 1 or 2 is to be used, namely whether or not the encapsulator or encapsulation means is to be used for dynamic host configuration.

According to the present embodiment, although not illustrated explicitly, the first decider or decision means may be arranged at the local DHCP client means or at the local DHCP relay agent means, in which case all DHCP messages are redirected via the local relay agent means. In the former case, the second decider or decision means may be arranged at the local DHCP client means, at the local DHCP relay agent means or at the local encapsulation means (encapsulator). In the later case, the second decider or decision means may be arranged at the local DHCP relay agent means or at the local encapsulation means (encapsulator).

The decision making in both stages may be based on the will of an application to originate the signaling, and/or policies and/or rules at the host apparatus, and/or an active third party entity in the host apparatus.

It is to be noted that the enhanced DHCP host apparatus of Fig. 9 is only enabled to perform a pervasive DHCP usage of the first alternative, thus comprising a first decider or decision means corresponding to the one above.

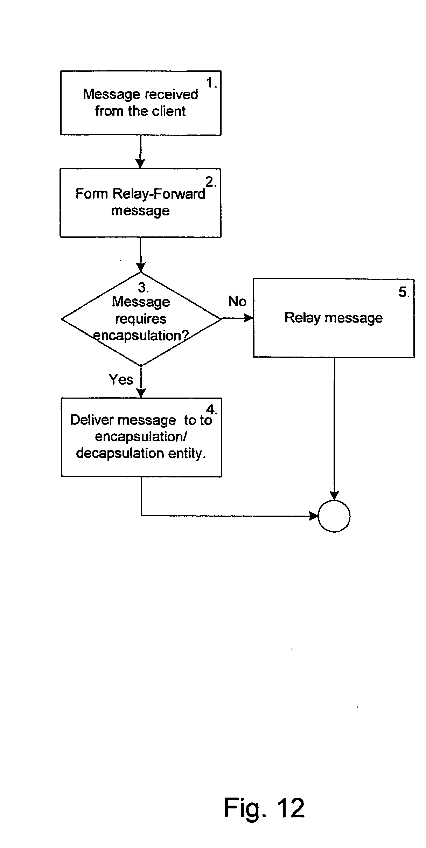

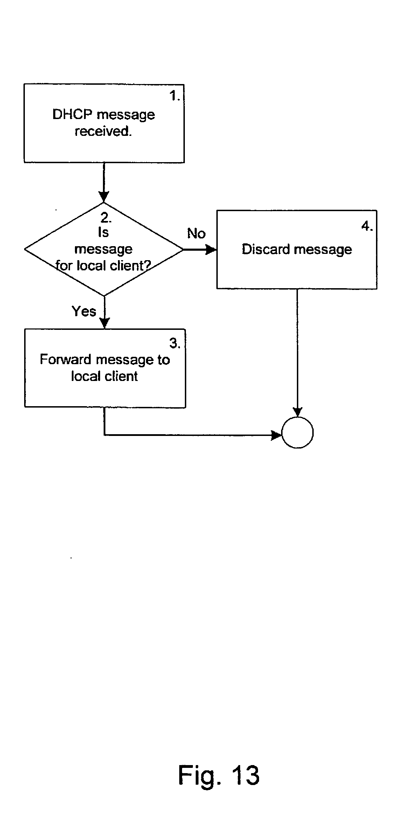

As regards additional functionality of the local relay agent means of Figs. 9 and 10, reference is made to Figs. 12 and 13. Again, the following schematic flow charts are self-explaining for a skilled person, thus a detailed description thereof will not be given herein. As above, respective apparatuses of the present embodiment (although not shown) are described by way of the functions carried out at them, respectively. However, it is to be understood that the present invention also comprises respectively configured and arranged apparatuses, devices and means.

Fig. 12 illustrates a schematic flow chart of a local relay agent means method for relaying messages received from a local client means according to an embodiment of the present invention. Thus, the relay agent means comprises correspondingly configured relaying means (i.e. a relay) and decision or determination means (i.e. a decider and a determinator) for making the decision of step 3 of Fig. 12.

Fig. 13 illustrates a schematic flow chart of a local relay agent means method for forwarding messages toward a local client means according to an embodiment of the present invention. The relay agent means comprises correspondingly configured forwarding means and decision or determination means for making the decision of step 2 of Fig. 13.

In general, as is obvious from the foregoing, in order to be enabled to receive DHCP response messages from a DHCP server (either directly or via a remote relay agent), the enhanced DHCP host apparatus further comprises a decapsulator or decapsulating means for receiving an encapsulated DHCP message from a remote relay agent apparatus or server apparatus and for decapsulating the received encapsulated host configuration message. Then, the relay agent means is further configured to receive a DHCP message and to determine whether or not the received message is destined for the local client means.

According to further certain embodiments, an enhanced DHCP host enables DHCP service for connected adjacent (proximity) networks such as MANET or PAN, when the enhanced DHCP host acts as a mobile router (MR) instead of or in addition to acting as a mobile node (MN) as described above.

A DHCP service for connected adjacent networks, when the host operates in MR mode, refers to functions both on the MN- and/or the MR-side of the enhanced DHCP host architecture, that can enable use of the same DHCP service for nodes in a network behind the MR as well as on the MN-side.

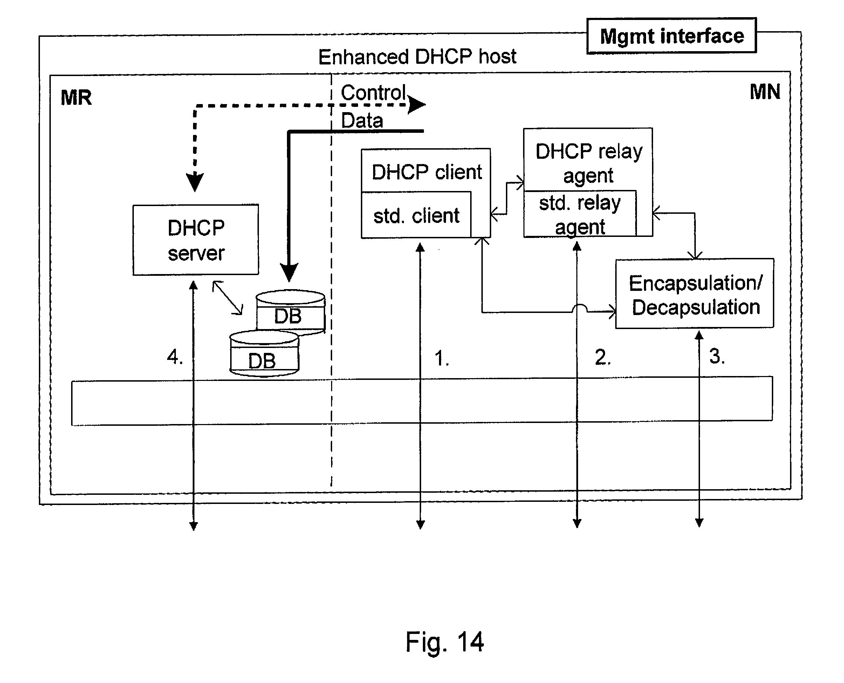

Fig. 14 illustrates a schematic block diagram of an enhanced DHCP host according to an embodiment of the present invention.

In Fig. 14, the mobile node (MN) side of the host basically corresponds to the hosts of the embodiments of Figs. 9 and 10. The arrows numbered 1, 2 and 3 indicate the different alternative operations of the above embodiments of the host's mobile node side.

Further to the devices and/or means of the MN side, the enhanced DHCP host of the present embodiment further comprises a mobile router (MR) side. On the MR side, the host comprises server means (i.e. a committer) for committing a dynamic host configuration of network nodes (not shown) connected to the MR-side of the host apparatus. This is indicated by arrow numbered 4 in Fig. 14, which indicates incoming DHCP messages (e.g. DHCPDISCOVER, DHCPREQUEST) from client network nodes and outgoing DHCP messages (e.g. DHCPOFFER) to the client network nodes, after processing at the MR-side of the host apparatus. The MR-side of the host further comprises at least one configuration database (DB), connected to the server means and to the MN-side of the host system, for receiving host configurations from the MN-side, e.g. from the client means, and for storing the thus received configurations (indicated by a solid line arrow denoted with data). For processing dynamic host configuration messages of its client network nodes, the server means accesses the database and uses the configurations stored therein.

An interface between the MR-side and the MN-side can be used to trigger configuration requests in the DHCP client means of the MN-side, i.e. DHCP requests of nodes in a connected adjacent network to the server means of the MR-side can trigger DHCP requests to the MN-side, e.g. to the client means (indicated by a dashed line arrow denoted with control). Moreover, this triggered request can trigger requests also to non-DHCP frameworks via a management interface being indicated in the right upper corner of the host. The management interface serves for importing new parameters to a DHCP service, exporting received parameters to an external framework, and/or requesting parameters from an external framework.

Nodes in the connected adjacent network are required to support standard DHCP and, if they do, the respective DHCP framework must be configured properly. But, if nodes support pervasive use of DHCP as defined and described hereinabove, no other DHCP entities are required to enable DHCP service. However, in the latter case nodes in the network must be aware of the address of a mobile router acting as DHCP server (which however should be a common functionality for mobile networks).

According to further certain embodiments, an enhanced DHCP host enables adaptive multi-access support for dynamic host configuration, e.g. according to DHCP. This functionality refers both to the mobile node (MN) side as well as to the mobile router (MR) side of the enhanced DHCP host, and is independent from the implementation of any one of the above-mentioned functionalities.

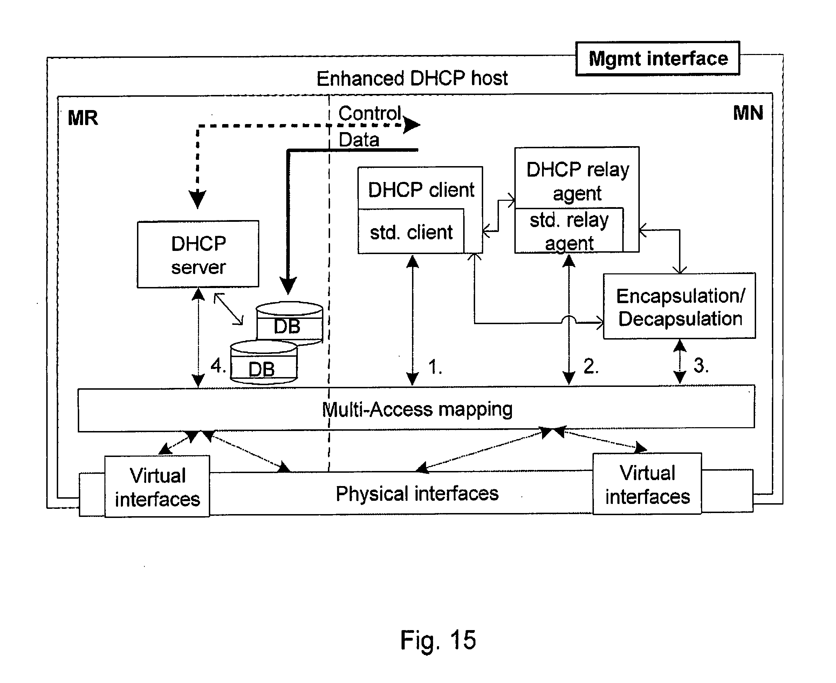

Fig. 15 illustrates a schematic block diagram of an enhanced DHCP host according to an embodiment of the present invention, said host having a plurality of interfaces for dynamic host configuration. The illustration of the present embodiment is exemplarily based on the previously described embodiment of Fig. 14. However, the present embodiment is not restricted thereto.

For the purpose of the present embodiment, adaptive multi-access support refers to functions in the host apparatus, that enable a seamless DHCP service in a multi-access host, namely in case of interface handovers. To this end, there is provided a multi-access mapping entity for adapting the host apparatus to the actual interface used for dynamic host configuration, e.g. according to DHCP. In detail, socket layer functions of DHCP client/relay agent/server are adapted to changes in physical and/or virtual interfaces, which includes monitoring changes in interfaces and implementing proper mapping functions for this purpose. Thereby, the enhanced DHCP host of the present embodiment is, in its DHCP transactions, not interface specific any more, and is adjustable to changing conditions, which is particularly beneficial in dynamic network environments.

While the illustrated multi-access mapping entity handles the handover issues in the system, also certain logical changes take place in the DHCP entities, namely in the client. An enhanced DHCP client (or host) of a present embodiment is thus configured to "see" (i.e. recognize) all logical interfaces (i.e. virtual and physical interfaces) of the host as concurrent interfaces (i.e. as one single interface) at all times. This means that transactions are not tied to specific interfaces in the client entity and receiving reply message from a "wrong" interface alone is not a valid reason to discard the received message in the client. In practice, this may be achieved by using a common transaction ID space for all logical interfaces. Stated in other words, the client means (acting as a processor) is further configured to operate in such a way that a dynamic host configuration is associated with any interface, instead of only one interface per transaction.

However, the client means preferably also maintains a functionality to handle interface specific configurations received in DHCP messages, even in a multi-access environment.

In contrast to the above solution for a multi-access architecture, prior DHCP entities usually are interface specific at least on logical level. For example, a DHCP client's transaction ID pools are interface-specific. In multi-access host architecture such an approach easily leads to discarding of DHCP reply messages in the client due to unknown and/or faulty transaction IDs, when interface handover takes place in the middle of a DHCP transaction. In other words, standard DHCP expects to receive reply from the same interface that the originating request was sent to. Also in standard DHCP, interface specific configurations received from a certain interface are configurations of that receiving interface by default and should not be used in other interfaces. Problems and drawbacks related with these prior art solutions are solved by the present embodiment.

In general, it is to be noted that respective functional elements according to above-described embodiments can be implemented by any known devices or means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Furthermore, method steps likely to be implemented as software code portions and being run using a processor at one of the entities are software code independent and can be specified using any known or future developed programming language such as e.g. C, C++, and Assembler. Method steps and/or devices or means likely to be implemented as hardware components at one of the peer entities are hardware independent and can be implemented using any known or future developed hardware technology or any hybrids of these, such as MOS, CMOS, BiCMOS, ECL, TTL, etc, using for example ASIC components or DSP components, as an example. Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to those skilled in the art.

In accordance with embodiments of the present invention, there is provided pervasive dynamic host configuration in a communication system comprising a plurality of domains being separated from each other by intermediary devices blocking host configuration messages, including encapsulation-based dynamic host configuration messaging and an enhanced hosts apparatus for dynamic host configuration.

Even though the invention is described above with reference to the examples according to the accompanying drawings, it is clear that the invention is not restricted thereto. Rather, it is apparent to those skilled in the art that the present invention can be modified in many ways without departing from the scope of the inventive idea as disclosed in the appended claims.

## Claims

1. A method, comprising
relaying a dynamic host configuration protocol, DHCP, message from client means toward a remote server apparatus, wherein the client means is located in a different domain than the remote server apparatus,
said relaying comprising
relaying, by relay agent means, the dynamic host configuration protocol, DHCP, message from the client means to encapsulating means,
encapsulating, by the encapsulating means, the dynamic host configuration protocol, DHCP, message based on an encapsulation procedure based on a protocol of layer 4 or above according to the OSI reference model, whose transmission is supported by intermediary devices separating a plurality of domains from each other and being configured to block dynamic host configuration protocol
, DHCP, messages, and
transferring the encapsulated dynamic host configuration protocol, DHCP, message from the encapsulating means toward the remote server apparatus through intermediary devices.

2. The method according to claim 1,
said method further comprising
initiating, by the client means, a dynamic host configuration of a host apparatus with the remote server apparatus in a communication system comprising the
plurality of domains being separated by the intermediary devices by generating the dynamic host configuration protocol, DHCP, message destined for the server apparatus,
and/or said relaying further comprising communicating between the relay agent means and remote relay agent apparatuses and server apparatuses by means of their global unicast addresses.

3. The method according to claim 1 or 2, further comprising:
first-stage deciding whether or not relaying is to be used for dynamic host configuration, and
second-stage deciding whether or not the encapsulating is to be used for dynamic host configuration.

4. The method according to any one of claims 1 to 3,further comprising:
receiving an encapsulated dynamic host configuration protocol message from a remote relay agent apparatus or server apparatus, and
decapsulating the received encapsulated dynamic host configuration protocol message, and/or
determining whether or not the received message is destined for the client means.

5. The method according to any one of claims 1 to 4,further comprising:
committing, by a server means, a dynamic host configuration of network nodes connected to a host apparatus, said network nodes acting as client nodes, by processing incoming dynamic host configuration protocol messages from the network nodes; and
storing, in a configuration database, host configurations received from the client means, wherein
said processing is performed by means of the configurations stored.

6. The method according to claim 5, further comprising triggering configuration requests from the server means in the client means.

7. The method according to any one of claims 1 to 6, wherein an apparatus for dynamic host configuration comprises a plurality of interfaces for dynamic host configuration, said method further comprising:
multi-access mapping to adapt a host apparatus, for which a dynamic host configuration is being performed, to an interface out of the plurality of interfaces, which is used for the dynamic host configuration.

8. The method according to claim 7, said multi-access mapping further comprising monitoring changes in at least one of physical or virtual interfaces of the host apparatus, and/or said client means being further configured to operate in such a way that a dynamic host configuration is associated with any interface.

9. The method according to any one of claims 1 to 8, wherein at least one of the client means and the relay agent means is comprised by a dynamic host configuration protocol, DHCP, host, and/or wherein the encapsulation procedure is based on a Hypertext Transfer Protocol.

10. An apparatus, comprising
a processor configured to operate as a relay configured to relay a dynamic host configuration protocol , DHCP, message from client means toward a remote server apparatus, wherein the client means is located in a different domain than the remote server apparatus,
said processor comprising
relaying means for relaying the dynamic host configuration protocol , DHCP, message from the client means to encapsulating means,
encapsulating means for encapsulating the dynamic host configuration, DHCP, protocol message based on an encapsulation procedure based on a protocol of layer 4 or above according to the OSI reference model, whose transmission is supported by intermediary devices separating a plurality of domains from each other and being configured to block dynamic host configuration protocol , DHCP, messages, and
transferring means for transferring the encapsulated dynamic host configuration protocol, DHCP, message from the encapsulating means toward the remote server apparatus through intermediary devices.

11. The apparatus according to claim 10,
further comprising
initiating means for initiating a dynamic host configuration of a host apparatus with the remote server apparatus in a communication system comprising the plurality of domains being separated by the intermediary devices by generating the dynamic host configuration protocol message destined for the server apparatus, and/or further comprising:
transceiving means for communicating with remote relay agent apparatuses and server apparatuses by means of their global unicast addresses.

12. The apparatus according to claim 10 or 11,
further comprising:
a first decider configured to decide on a first stage whether or not the relay is to be used for dynamic host configuration, and
a second decider configured to decide on a second stage whether or not the encapsulator is to be used for dynamic host configuration.

13. The apparatus according to any one of claims 10 to 12, further comprising:
receiving means for receiving an encapsulated dynamic host configuration protocol message from a remote relay agent apparatus or server apparatus; and
decapsulating means for decapsulating the received encapsulated dynamic host configuration protocol message, and/or
determinating means for determining whether or not the received message is destined for the initiator.

14. The apparatus according to any one of claims 10 to 13, further comprising:
committing means for committing a dynamic host configuration of network nodes connected to a host apparatus, said network nodes acting as client nodes, by processing incoming dynamic host configuration protocol messages from the network nodes; and
storing means for receiving host configurations from the initiating means and storing the configurations,
said committing means further comprising processing means for processing the incoming messages by way of the configurations stored in the storing means.

15. The apparatus according to claim 14, said committing means further comprising triggering means for triggering configuration requests in the initiator.

16. The apparatus according to any one of claims 10 to 15, said apparatus having a plurality of interfaces for dynamic host configuration, further comprising:
multi-access mapping means for adapting a host apparatus, for which a dynamic host configuration is being performed, to an interface out of the plurality of interfaces, which is used for dynamic host configuration.

17. The apparatus according to claim 16, said multi-access mapping means further comprising monitoring means for monitoring changes in at least one of physical or virtual interfaces of the host apparatus, and/or said initiating means further comprising processing means for operating in such a way that a dynamic host configuration is associated with any interface.

18. The apparatus according to any one of claims 10 to 17, wherein the apparatus comprises a dynamic host configuration protocol, DHCP, host, and/or wherein the encapsulation procedure is based on a Hypertext Transfer Protocol.

19. A computer program embodied in a computer-readable medium, comprising program code configured to operate a host apparatus for dynamic host configuration in a communication system comprising a plurality of domains being separated from each other by éintermediary devices configured to block dynamic host configuration protocol , DHCP, messages, the computer program being configured to carry out the processes of any one of claims 1 to 9.

## Patentansprüche

1. Verfahren, das aufweist:
Weiterleiten einer Nachricht eines Protokolls für eine dynamische Hostkonfiguration, DHCP, von einer Client-Einrichtung in Richtung einer entfernten Server-Vorrichtung, wobei sich die Client-Einrichtung in einer anderen Domäne als die entfernte Server-Vorrichtung befindet,
wobei das Weiterleiten aufweist:
Weiterleiten, durch eine Weiterleitungsagent-Einrichtung, der Nachricht des Protokolls für eine dynamische Hostkonfiguration, DHCP, von der Client-Einrichtung an eine Verkapselungseinrichtung,
Verkapseln, durch die Verkapselungseinrichtung, der Nachricht des Protokolls für eine dynamische Hostkonfiguration, DHCP, basierend auf einem Verkapselungsvorgang, der auf einem Protokoll von Schicht 4 oder höher gemäß dem OSI-Referenzmodell basiert, dessen Übertragung durch Zwischeneinheiten unterstützt wird, die eine Vielzahl von Domänen voneinander trennen und dazu konfiguriert sind, Nachricht des Protokolls für eine dynamische Hostkonfiguration, DHCP, zu blocken, und
Übermitteln der verkapselten Nachricht des Protokolls für eine dynamische Hostkonfiguration, DHCP, von der Verkapselungseinrichtung über Zwischeneinheiten in Richtung der entfernten Server-Vorrichtung.

2. Vorrichtung gemäß Anspruch 1,
wobei das Verfahren zusätzlich aufweist:
Einleiten, durch die Client-Einrichtung, einer dynamischen Hostkonfiguration einer Host-Vorrichtung mit der entfernten Server-Vorrichtung in einem Kommunikationssystem mit der Vielzahl von Domänen, die durch die Zwischeneinheiten getrennt sind, durch Erzeugen der für die Server-Vorrichtung bestimmten Nachricht des Protokolls für eine dynamische Hostkonfiguration, DHCP,
und/oder wobei das Weiterleiten zusätzlich aufweist:
Kommunizieren zwischen der Weiterleitungsagent-Einrichtung und entfernten Weiterleitungsagent-Vorrichtungen und Server-Vorrichtungen mit Hilfe ihrer globalen Unicast-Adressen.

3. Verfahren gemäß Anspruch 1 oder 2, zusätzlich mit:
Entscheiden in erster Stufe, ob ein Weiterleiten für eine dynamischen Hostkonfiguration zu verwenden ist oder nicht, und
Entscheiden in zweiter Stufe, ob das Verkapseln für eine dynamische Hostkonfiguration zu verwenden ist oder nicht.

4. Verfahren gemäß einem der Ansprüche 1 bis 3, zusätzlich mit:
Empfangen einer verkapselten Nachricht des Protokolls für eine dynamische Hostkonfiguration von einer entfernten Weiterleitungsagent-Vorrichtung oder Server-Vorrichtung, und
Entkapseln der empfangenen verkapselten Nachricht des Protokolls für eine dynamische Hostkonfiguration, und/oder
Bestimmen, ob die empfangene Nachricht für die Client-Einrichtung bestimmt ist oder nicht.

5. Verfahren gemäß einem der Ansprüche 1 bis 4, zusätzlich mit:
Verüben, durch eine Server-Einrichtung, einer dynamischen Hostkonfiguration von mit einer Host-Vorrichtung verbundenen Netzwerkknoten, wobei die Netzwerkknoten als Client-Knoten fungieren, durch Verarbeiten einer ankommenden Nachricht des Protokolls für eine dynamische Hostkonfiguration von den Netzwerkknoten; und
Speichern von Hostkonfigurationen, die von der Client-Einrichtung empfangen werden, in einer Konfigurationsdatenbank, wobei
das Verarbeiten mit Hilfe der gespeicherten Konfigurationen durchgeführt wird.

6. Verfahren gemäß Anspruch 5, zusätzlich mit einem Auslösen von Konfigurationsanforderungen von der Server-Einrichtung in der Client-Einrichtung.

7. Verfahren gemäß einem der Ansprüche 1 bis 6, wobei eine Vorrichtung für eine dynamische Hostkonfiguration eine Vielzahl von Schnittstellen für eine dynamische Hostkonfiguration aufweist, wobei das Verfahren zusätzlich aufweist:
eine Mehrfachzugang-Abbildung zum Anpassen einer Host-Vorrichtung, für die eine dynamische Hostkonfiguration durchgeführt wird, an eine Schnittstelle aus der Vielzahl von Schnittstellen, die für die dynamische Hostkonfiguration verwendet wird.

8. Verfahren gemäß Anspruch 7, wobei die Mehrfachzugang-Abbildung zusätzlich ein Überwachen von Änderungen in zumindest einer von physikalischen oder virtuellen Schnittstellen der Host-Vorrichtung umfasst, und/oder die Client-Einrichtung zusätzlich dazu konfiguriert ist, in einer solchen Art und Weise zu arbeiten, dass eine dynamische Hostkonfiguration mit einer beliebigen Schnittstelle in Zusammenhang steht.

9. Verfahren gemäß einem der Ansprüche 1 bis 8, wobei zumindest eine der Client-Einrichtung und der Weiterleitungsagent-Einrichtung von einem Host des Protokolls für eine dynamische Hostkonfiguration, DHCP, umfasst ist, und/oder wobei der Verkapselungsvorgang auf einem Hypertext-Transfer-Protokoll basiert.

10. Vorrichtung, die aufweist:
einen Prozessor, der dazu konfiguriert ist, als eine Weiterleitungseinheit zu arbeiten, die dazu konfiguriert ist, eine Nachricht eines Protokolls für eine dynamische Hostkonfiguration, DHCP, von einer Client-Einrichtung in Richtung einer entfernten Server-Vorrichtung weiterzuleiten, wobei sich die Client-Einrichtung in einer anderen Domäne als die entfernte Server-Vorrichtung befindet,
wobei der Prozessor aufweist:
eine Weiterleitungseinrichtung zum Weiterleiten der Nachricht des Protokolls für eine dynamische Hostkonfiguration, DHCP, von der Client-Einrichtung an eine Verkapselungseinrichtung,
eine Verkapselungseinrichtung zum Verkapseln der Nachricht des Protokolls für eine dynamische Hostkonfiguration, DHCP, basierend auf einem Verkapselungsvorgang, der auf einem Protokoll einer Schicht 4 oder höher gemäß dem OSI-Referenzmodell basiert, dessen Übertragung durch Zwischeneinheiten unterstützt wird, die eine Vielzahl von Domänen voneinander trennen und dazu konfiguriert sind, Nachricht des Protokolls für eine dynamische Hostkonfiguration, DHCP, zu blocken, und
eine Übermittlungseinrichtung zum Übermitteln der verkapselten Nachricht des Protokolls für eine dynamische Hostkonfiguration, DHCP, von der Verkapselungseinrichtung über Zwischeneinheiten in Richtung der entfernten Server-Vorrichtung.

11. Vorrichtung gemäß Anspruch 10, zusätzlich mit:
einer Einleitungseinrichtung zum Einleiten einer dynamischen Hostkonfiguration einer Host-Vorrichtung mit der entfernten Server-Vorrichtung in einem Kommunikationssystem mit der Vielzahl von Domänen, die durch die Zwischeneinheiten getrennt sind, durch Erzeugen der für die Server-Vorrichtung bestimmten Nachricht des Protokolls für eine dynamische Hostkonfiguration, und/oder
zusätzlich mit:
einer Sendeempfangseinrichtung zum Kommunizieren mit entfernten Weiterleitungsagent-Vorrichtungen und Server-Vorrichtungen mit Hilfe ihrer globalen Unicast-Adressen.

12. Vorrichtung gemäß Anspruch 10 oder 11,
zusätzlich mit:
einer ersten Entscheidungseinheit, die dazu konfiguriert ist, in einer ersten Stufe zu entscheiden, ob die Weiterleitungseinheit für eine dynamische Hostkonfiguration zu verwenden ist oder nicht, und
einer zweiten Entscheidungseinheit, die dazu konfiguriert ist, in einer zweiten Stufe zu entscheiden, ob die Verkapselungseinheit für eine dynamische Hostkonfiguration zu verwenden ist oder nicht.

13. Vorrichtung gemäß einem der Ansprüche 10 bis 12, zusätzlich mit:
einer Empfangseinrichtung zum Empfangen einer verkapselten Nachricht des Protokolls für eine dynamische Hostkonfiguration von einer entfernten Weiterleitungsagent-Vorrichtung oder Server-Vorrichtung; und
einer Entkapselungseinrichtung zum Entkapseln der empfangenen verkapselten Nachricht des Protokolls für eine dynamische Hostkonfiguration, und/oder
einer Bestimmungseinrichtung zum Bestimmen, ob die empfangene Nachricht für die Einleitungseinheit bestimmt ist oder nicht.

14. Vorrichtung gemäß einem der Ansprüche 10 bis 13, zusätzlich mit:
einer Verübungseinrichtung zum Verüben einer dynamischen Hostkonfiguration von mit einer Host-Vorrichtung verbundenen Netzwerkknoten, wobei die Netzwerkknoten als Client-Knoten fungieren, durch Verarbeiten von ankommenden Nachrichten des Protokolls für eine dynamische Hostkonfiguration von den Netzwerkknoten; und
einer Speichereinrichtung zum Empfangen von Hostkonfigurationen von der Einleitungseinrichtung und Speichern der Konfigurationen,
wobei die Verübungseinrichtung zusätzlich eine Verarbeitungseinrichtung zum Verarbeiten der ankommenden Nachrichten mit Hilfe der in der Speichereinrichtung gespeicherten Konfigurationen aufweist.

15. Vorrichtung gemäß Anspruch 14, wobei die Verübungseinrichtung zusätzlich eine Auslösungseinrichtung zum Auslösen von Konfigurationsanforderungen in der Einleitungseinheit aufweist.

16. Vorrichtung gemäß einem der Ansprüche 10 bis 15, wobei die Vorrichtung eine Vielzahl von Schnittstellen für eine dynamische Hostkonfiguration aufweist, zusätzlich mit:
einer Mehrfachzugang-Abbildungseinrichtung zum Anpassen einer Host-Vorrichtung, für die eine dynamische Hostkonfiguration durchgeführt wird, an eine Schnittstelle aus der Vielzahl von Schnittstellen, die für eine dynamische Hostkonfiguration verwendet wird.

17. Vorrichtung gemäß Anspruch 16, wobei die Mehrfachzugang-Abbildungseinrichtung zusätzlich eine Überwachungseinrichtung zum Überwachen von Änderungen in zumindest einer von physikalischen oder virtuellen Schnittstellen der Host-Vorrichtung aufweist, und/oder die Einleitungseinrichtung zusätzlich eine Verarbeitungseinrichtung zum Arbeiten in einer solchen Art und Weise aufweist, dass eine dynamische Hostkonfiguration mit einer beliebigen Schnittstelle in Zusammenhang steht.

18. Vorrichtung gemäß einem der Ansprüche 10 bis 17, wobei die Vorrichtung einen Host des Protokolls für eine dynamische Hostkonfiguration, DHCP aufweist, und/oder wobei der Verkapselungsvorgang auf einem Hypertext-Transfer-Protokoll basiert.

19. Computerprogramm, das in einem computerlesbaren Medium verkörpert ist, mit Programmcode, der dazu konfiguriert ist, eine Host-Vorrichtung für eine dynamische Hostkonfiguration in einem Kommunikationssystem mit einer Vielzahl von Domänen zu betreiben, die durch Zwischeneinheiten voneinander getrennt sind, die zum Blocken von Nachrichten eines Protokolls für eine dynamische Hostkonfiguration, DHCP, konfiguriert sind, wobei das Computerprogramm dazu konfiguriert ist, die Prozesse gemäß einem der Ansprüche 1 bis 9 durchzuführen.

## Revendications

1. Procédé, comprenant :
le relais d'un message de protocole de configuration d'hôte dynamique, DHCP, d'un moyen client vers un appareil serveur distant, dans lequel le moyen client est situé dans un domaine différent de celui de l'appareil serveur distant,
ledit relais comprenant
le relais, par un moyen agent relais, du message de protocole de configuration d'hôte dynamique, DHCP, du moyen client à un moyen d'encapsulation,
l'encapsulation, par un moyen d'encapsulation, du message de protocole de configuration d'hôte dynamique, DHCP, sur la base d'une procédure d'encapsulation basée sur un protocole de couche 4 ou supérieure selon le modèle de référence OSI, dont la transmission est prise en charge par des dispositifs intermédiaires séparant une pluralité de domaines entre eux et étant configurés pour bloquer des messages de protocole de configuration d'hôte dynamique, DHCP, et
le transfert du message de protocole de configuration d'hôte dynamique, DHCP, encapsulé du moyen d'encapsulation vers l'appareil serveur distant à travers des dispositifs intermédiaires.

2. Procédé selon la revendication 1,
ledit procédé comprenant en outre
l'initiation, par le moyen client, d'une configuration d'hôte dynamique d'un appareil hôte avec l'appareil serveur distant dans un système de communication comprenant la pluralité de domaines étant séparés par les dispositifs intermédiaires en générant le message de protocole de configuration d'hôte dynamique, DHCP, destiné à l'appareil serveur,
et/ou ledit relais comprenant en outre :
la communication entre les moyens agents relais et des appareils agents relais distants et des appareils serveurs au moyen de leurs adresses unicast globales.

3. Procédé selon la revendication 1 ou 2, comprenant en outre :
la décision de premier étage si le relais doit être utilisé ou pas pour la configuration d'hôte dynamique, et
la décision de deuxième étage si l'encapsulation doit être utilisée pour la configuration d'hôte dynamique.

4. Procédé selon l'une quelconque des revendications 1 à 3, comprenant en outre :
la réception d'un message de protocole de configuration d'hôte dynamique encapsulé d'un appareil agent relais distant ou d'un appareil serveur, et
la décapsulation du message de protocole de configuration d'hôte dynamique encapsulé reçu, et/ou
la détermination si le message reçu est destiné ou pas au moyen client.

5. Procédé selon l'une quelconque des revendications 1 à 4, comprenant en outre :
la réalisation, par un moyen serveur, d'une configuration d'hôte dynamique de noeuds de réseau connectés à un appareil hôte, lesdits noeuds de réseau agissant comme des noeuds clients, en traitant des messages de protocole de configuration d'hôte dynamique entrants des noeuds de réseau ; et
le stockage, dans une base de données de configurations, des configurations d'hôte reçues du moyen client, dans lequel
ledit traitement est effectué au moyen des configurations stockées.

6. Procédé selon la revendication 5, comprenant en outre :
le déclenchement de demandes de configuration du moyen serveur dans le moyen client.

7. Procédé selon l'une quelconque des revendications 1 à 6, dans lequel un appareil de configuration d'hôte dynamique comprend une pluralité d'interfaces de configuration d'hôte dynamique, ledit procédé comprenant en outre :
la cartographie à accès multiples pour adapter un appareil hôte, pour lequel une configuration d'hôte dynamique est en cours d'exécution, à une interface parmi la pluralité d'interfaces, qui est utilisée pour la configuration d'hôte dynamique.

8. Procédé selon la revendication 7, ladite cartographie à accès multiples comprenant en outre la surveillance des changements dans au moins l'une des interfaces physiques ou virtuelles de l'appareil hôte, et/ou ledit moyen client étant en outre configuré pour fonctionner de manière à ce qu'une configuration d'hôte dynamique soit associée à n'importe quelle interface.

9. Procédé selon l'une quelconque des revendications 1 à 8, dans lequel au moins l'un du moyen client et des moyens agents relais se compose d'un hôte de protocole de configuration d'hôte dynamique, DHCP, et/ou dans lequel la procédure d'encapsulation est basée sur un protocole de transfert hypertexte.

10. Appareil, comprenant :
un processeur configuré pour fonctionner en tant que relais configuré pour relayer un message de protocole de configuration d'hôte dynamique, DHCP, d'un moyen client vers un appareil serveur distant, dans lequel le moyen client est situé dans un domaine différent de celui de l'appareil serveur distant,
ledit processeur comprenant
un moyen relais pour relayer le message de protocole de configuration d'hôte dynamique, DHCP, du moyen client à un moyen d'encapsulation,
un moyen d'encapsulation pour encapsuler le message de protocole de configuration d'hôte dynamique, DHCP, sur la base d'une procédure d'encapsulation basée sur un protocole de couche 4 ou supérieure selon le modèle de référence OSI, dont la transmission est prise en charge par des dispositifs intermédiaires séparant une pluralité de domaines entre eux et étant configurés pour bloquer des messages de protocole de configuration d'hôte dynamique, DHCP, et
un moyen de transfert pour transférer le message de protocole de configuration d'hôte dynamique, DHCP, encapsulé du moyen d'encapsulation vers l'appareil serveur distant à travers des dispositifs intermédiaires.

11. Appareil selon la revendication 10,
comprenant en outre
un moyen d'initiation pour initier une configuration d'hôte dynamique d'un appareil hôte avec l'appareil serveur distant dans un système de communication comprenant la pluralité de domaines étant séparés par les dispositifs intermédiaires en générant le message de protocole de configuration d'hôte dynamique destiné à l'appareil serveur, et/ou comprenant en outre :
un moyen d'émission-réception avec des appareils agents relais distants et des appareils serveurs au moyen de leurs adresses unicast globales.

12. Appareil selon la revendication 10 ou 11, comprenant en outre :
un premier décideur configuré pour décider à un premier étage si le relais doit être utilisé ou pas pour la configuration d'hôte dynamique, et
un deuxième décideur configuré pour décider à un deuxième étage si l'encapsuleur doit être utilisé pour la configuration d'hôte dynamique.

13. Appareil selon l'une quelconque des revendications 10 à 12, comprenant en outre :
un moyen de réception pour recevoir un message de protocole de configuration d'hôte dynamique encapsulé d'un appareil agent relais distant ou d'un appareil serveur ; et
un moyen de décapsulation pour décapsuler le message de protocole de configuration d'hôte dynamique encapsulé reçu, et/ou
un moyen de détermination pour déterminer si le message reçu est destiné ou pas à l'initiateur.

14. Appareil selon l'une quelconque des revendications 10 à 13, comprenant en outre :
un moyen de réalisation pour réaliser une configuration d'hôte dynamique de noeuds de réseau connectés à un appareil hôte, lesdits noeuds de réseau agissant comme des noeuds clients, en traitant des messages de protocole de configuration d'hôte dynamique entrants des noeuds de réseau ; et
un moyen de stockage pour recevoir des configurations d'hôte du moyen d'initiation et stocker les configurations,
ledit moyen de réalisation comprenant en outre un moyen de traitement pour traiter les messages entrants au moyen des configurations stockées dans le moyen de stockage.

15. Appareil selon la revendication 14, ledit moyen de réalisation comprenant en outre un moyen de déclenchement pour déclencher des demandes de configuration dans l'initiateur.

16. Appareil selon l'une quelconque des revendications 10 à 15, dans lequel ledit appareil comprend une pluralité d'interfaces de configuration d'hôte dynamique, comprenant en outre :
un moyen de cartographie à accès multiples pour adapter un appareil hôte, pour lequel une configuration d'hôte dynamique est en cours d'exécution, à une interface parmi la pluralité d'interfaces, qui est utilisée pour la configuration d'hôte dynamique.

17. Appareil selon la revendication 16, ledit moyen de cartographie à accès multiples comprenant en outre un moyen de surveillance pour surveiller les changements dans au moins l'une des interfaces physiques ou virtuelles de l'appareil hôte, et/ou ledit moyen d'initiation comprenant en outre un moyen de traitement pour fonctionner de manière à ce qu'une configuration d'hôte dynamique soit associée à n'importe quelle interface.

18. Appareil selon l'une quelconque des revendications 10 à 17, dans lequel l'appareil comprend un hôte de protocole de configuration d'hôte dynamique, DHCP, et/ou dans lequel la procédure d'encapsulation est basée sur un protocole de transfert hypertexte.

19. Programme informatique concrétisé sur un support lisible par ordinateur, comprenant un code de programme configuré pour faire fonctionner un appareil hôte pour une configuration d'hôte dynamique dans un système de communication comprenant une pluralité de domaines étant séparés entre eux par des dispositifs intermédiaires configurés pour bloquer des messages de protocole de configuration d'hôte dynamique, DHCP, le programme informatique étant configuré pour effectuer les processus selon l'une quelconque des revendications 1 à 9.
